# EUROPÄISCHE PATENTSCHRIFT

(11) **EP 3 663 156 B1**
(45) Veröffentlichungstag und Bekanntmachung des Hinweises auf die Patenterteilung: **22.03.2023**
(21) Anmeldenummer: 19212933.6
(22) Anmeldetag: 02.12.2019
(51) Int. Cl.: B61C 3/02, B61D 27/00

(54) **VERFAHREN ZUM BETREIBEN EINES ELEKTRISCH ANTREIBBAREN FAHRZEUGS UND FAHRZEUG**
METHOD FOR OPERATING AN ELECTRICALLY OPERATED VEHICLE AND VEHICLE
PROCÉDÉ DE FONCTIONNEMENT D'UN VÉHICULE À ENTRAÎNEMENT ÉLECTRIQUE ET VÉHICULE

(30) Priorität: 03.12.2018 DE 102018130726
(43) Veröffentlichungstag der Anmeldung: 10.06.2020
(73) Patentinhaber: ALSTOM Holdings, 93400 Saint-Ouen-sur-Seine (FR)
(72) Erfinder: Buschbeck, Jan, 13509 Berlin (DE); Stahnke, Susann, 16540 Hohen-Neuendorf (DE)
(74) Vertreter: Zimmermann & Partner Patentanwälte mbB

(56) Entgegenhaltungen:
- EP-A1- 3 168 101
- EP-A1- 3 470 287
- DE-A1-102013 207 952
- DE-B3-102017 129 255

## Beschreibung

### Technisches Gebiet

Die vorliegende Erfindung betrifft ein Verfahren zum Betreiben eines elektrisch antreibbaren Fahrzeugs, insbesondere eines elektrisch antreibbaren Schienenfahrzeugs, und ein entsprechendes Fahrzeug.

### Vorbekannter Stand der Technik

Der Energieverbrauch von Fahrzeugen im Betrieb bestimmt maßgeblich die Betriebskosten und die Reichweite. Ein nicht unerheblicher Anteil der Gesamtenergie kann dabei von nicht direkt dem Antrieb dienenden Komponenten wie etwa einer Klimaanlage, der Beleuchtung oder anderen Hilfsverbrauchern, insbesondere Hilfsverbrauchern, die dem der Sicherheit, dem Komfort und/oder der Gesundheit von Insassen dienen, verbraucht werden.

In der EP 2433845 B1 wird zur Reduzierung der Gesamtverbrauchsleistung von über Oberleitungen oder dritte Schienen versorgten Zügen ein Eisenbahnwaggon vorgeschlagen, der folgendes umfasst: eine Lufteinlassvorrichtung zum Einführen von Außenluft in den Waggon, die eine Öffnungs- und eine Schließeinrichtung aufweist, eine Evakuierungsvorrichtung, die eine Öffnungs- und eine Schließeinrichtung aufweist, einen Luft-Evakuierungsventilator zum Evakuieren der Innenluft an die Außenseite des Waggons, eine Klimaanlageneinheit zum Steuern der Temperatur und einer Luftfeuchtigkeit innerhalb des Waggons, und eine Steuereinheit zum Steuern der Lufteinlassvorrichtung, der Evakuierungsvorrichtung und des Luft-Evakuierungsventilators, wobei der Eisenbahnwaggon ferner einen mit der Evakuierungsvorrichtung ausgestatteten ersten Evakuierungsströmungspfad und einen parallel zu dem ersten Evakuierungsströmungspfad angeordneten und mit dem Luft-Evakuierungsventilator ausgestatteten zweiten Evakuierungsströmungspfad umfasst, und wobei die Steuereinheit dazu ausgelegt ist, die Außen- und die Innentemperatur des Eisenbahnwaggons und Geschwindigkeitsdaten des Eisenbahnwaggons zu erfassen, und das Öffnungsmaß der Öffnungs- und Schließeinrichtung der Lufteinlassvorrichtung, das Öffnungsmaß der Öffnungs- und Schließeinrichtung der Evakuierungsvorrichtung, und den Luft-Evakuierungsventilator auf Grundlage der Innentemperatur, der Außentemperatur und der Geschwindigkeitsdaten des Eisenbahnwaggons zu steuern.

In der US 6,494,777 B1 wird ein Klimagerät vorgeschlagen, das einzeln oder in Kombination mit einer kleinen Klimaanlage verwendet werden kann. Dabei wird die Konzentration von Kohlendioxid (CO₂) in einem geschlossenen Raum durch ein Kohlendioxidkonzentrationsdetektionsmodul erfasst. Wenn die erfasste Kohlendioxidkonzentration einen vorgegebenen oberen Grenzwert erreicht, wird ein Klimatisierungsmechanismus durch ein Klimasteuerungsmodul zum Einbringen von externer Frischluft in den Raum angetrieben. Wenn die Kohlendioxidkonzentration auf einen vorgegebenen unteren Grenzwert sinkt, wird die Einbringung der Außenluft gestoppt. Daher kann die Kohlendioxidkonzentration im Raum richtig eingestellt werden, um eine gute Luftqualität zu erhalten.

Die EP 2202106 A1 beschreibt eine Luftbehandlungseinheit, die an eine Klimaanlage eines Transportfahrzeuges angebracht werden kann, umfassend einen Körper, mindestens einen Wärmetauscher, der mit einem zusätzlichen Kühlmittel versorgt wird, wobei dieser Wärmetauscher dazu ausgelegt ist, die Luft zu konditionieren, die dazu bestimmt ist, in einen Fahrgastraum eines Fahrzeugs einzutreten, wobei diese Einheit auch Mittel zum Einlassen von Außenluft und Mittel zum Absaugen von Innenluft umfasst, sowie Mittel zum Einblasen von Luft in Richtung des Fahrgastraums, einen Sensor zum Messen mindestens eines Parameters der Raumluft des Fahrgastraums, insbesondere eine CO₂-Konzentration, und Steuermittel, die zum Steuern der Öffnung der Mittel zum Einlassen von Außenluft und Mittel zum Absaugen von Innenluft geeignet sind, wenn der Wert dieses Parameters größer oder kleiner ist als ein vorbestimmter Wert.

Außerdem wird in der JP 2000006800 A zur Reduzierung des Stromverbrauchs und der Geräusche, wenn die Anzahl der Insassen in einem Auto gering ist, vorgeschlagen, die Lüftungsluftmenge an die Anzahl der Insassen anzupassen. Dabei ist ein Kohlendioxidkonzentrationsdetektor entweder auf der Vorder- oder Rückseite eines Abluftventilators vorgesehen. Der Mittelwert der Kohlendioxidkonzentration der aus den jeweiligen Teilen in einem Fahrzeug gesammelten Abluft wird überwacht. Informationen vom Kohlendioxidkonzentrationsdetektor werden an eine Steuerung oder eine Spannungsquellen-Frequenzsteuerung übertragen und durch Steuern variabler Mechanismen eines Strömungsdurchgangsabschnitts oder eines Motors zum Antreiben eines Ventilators wird die Menge der Abluft eingestellt.

Weiterhin beschreibt die DE 10 2013 207 952 A1 eine Vorrichtung zum Betreiben zumindest eines elektrischen Verbrauchers eines Schienenfahrzeugs, welcher mit einer durch einen Bremsvorgang des Schienenfahrzeugs erzeugten elektrischen Energie betreibbar ist, mit einer Steuereinheit zum Steuern des Betriebs des Verbrauchers gemäß wenigstens zwei Betriebsmodi, wobei ein erster Betriebsmodus für eine erste Betriebsphase des Verbrauchers während einer Bremsphase des Schienenfahrzeugs vorgesehen ist, ein zweiter Betriebsmodus für eine zweite Betriebsphase des Verbrauchers während einer der Bremsphase vorangehenden Fahrtphase des Schienenfahrzeugs vorgesehen ist und die Steuereinheit dazu vorgesehen ist, den Verbraucher für den ersten und zweiten Betriebsmodus derart zu steuern, dass seine Betriebsleistung im zweiten Betriebsmodus kleiner als im ersten Betriebsmodus ist. Dazu weist die Vorrichtung eine Einheit auf, die dazu vorgesehen ist, zumindest einen Auslöseparameter der zweiten Betriebsphase abhängig von zumindest einem Merkmal der Bremsphase festzulegen.
Die EP 3 168 101 A1 beschreibt ein Verfahren zur koordinierten Steuerung von Komponenten eines Schienenfahrzeugs mit Hybridantrieb zur Senkung des Energiebedarfs, insbesondere des Kraftstoffverbrauchs. Dabei wird eine Einbeziehung von nicht-komfortbezogenen Hilfsbetrieben des Schienenfahrzeugs durchgeführt, wobei die Druckluftversorgung des Schienenfahrzeugs in der Weise durchgeführt wird, dass das Luftvolumen auch zu Zeiten ergänzt wird, in der der Druck der Druckluftanlage sich oberhalb des unteren ursprünglichen Einschaltschwellwerts der Kompressoranlage befindet, wenn durch das dadurch bewirkte zeitliche Vorziehen des Leistungsbedarfs Arbeitspunkte höheren Wirkungsgrads im Zusammenwirken von Verbrennungsmotor(en), Antriebsanlage einschließlich des Betriebsmodus der generatorischen Rückspeisung und Energiespeicher erreicht werden, und die konventionelle zweipunktabhängige Druckregelung als eine Rückfallebene dient, die einen Schutz vor unzulässigem Unterdruck und Überdruck gewährleistet.
Weiter beschreibt die DE 10 2017 129 255 B3 ein Kontrollsystem zur Steuerung der Energieversorgung wenigstens eines Verbrauchers eines batteriebetriebenen Fahrzeuges, insbesondere für ein Schienenfahrzeug, mit wenigstens einem Messmittel zur Bestimmung des Ladezustandes der Batterie und einer mit dem Messmittel verbundenen Steuereinrichtung zum Deaktivieren des wenigstens einen Verbrauchers bei Erreichen eines vorbestimmten minimalen Ladezustands. Um die Wahrscheinlichkeit des Liegenbleibens des Fahrzeuges zu minimieren oder zu verringern, ist eine Benutzerschnittstelle mit einem mit der Steuereinrichtung (5) signalübertragend verbundenen Bedienelement vorgesehen, wobei durch die Betätigung des Bedienelementes der wenigstens eine Verbraucher nach einer Deaktivierung reaktivierbar ist.
Schließlich beschreibt die nachveröffentlichte EP 3 470 287 A1 ein Schienenfahrzeug mit einer auf dem Fahrzeug installierten, internen Energiequelle zur Energieversorgung des Antriebs auf Streckenabschnitten ohne externe Energiequelle, und mit einem Stromabnehmer zur Energieversorgung des Antriebs auf Streckenabschnitten mit externer Energiequelle.

### Nachteile des Standes der Technik

Die bisher bekannten Lösungen können zwar zur generellen Reduzierung des Energieverbrauchs von Hilfsverbrauchern von Fahrzeugen beitragen und damit bspw. auch für batteriebetriebene Fahrzeuge eingesetzt werden. Dennoch ist die Reichweite von Fahrzeugen, die während der normalen Fahrt über eine externe elektrische Energieversorgung versorgt werden und die über einen internen Energiespeicher zur Überbrückung eines Ausfalls der / einer Lücke in der externen elektrischen Energieversorgung während der Fahrt verfügen, beim Überbrücken vergleichsweise gering und/oder ein entsprechend teurer und/oder schwerer interner Energiespeicher zur Überbrückung vorzusehen, der auf Grund seiner Masse zudem auch während der normalen Fahrt zu einem erhöhten Energieverbrauch und/oder erhöhten Anforderungen an ein Antriebs- und/oder Bremssystem des Fahrzeugs führen kann.

### Problemstellung

Eine Aufgabe der vorliegenden Erfindung ist es, bei zumindest im Wesentlichen gleichen Anforderungen an den interner Energiespeicher und/oder das Antriebs- und/oder Bremssystem des Fahrzeugs, die Reichweite derartiger Fahrzeuge beim Überbrücken eines Ausfalls der bzw. einer Lücke in der externen elektrischen Energieversorgung weiter zu erhöhen.

### Erfindungsgemäße Lösung

Die obige Aufgabe wird durch ein Verfahren nach Anspruch 1 und ein Fahrzeug nach Anspruch 8 gelöst.

Gemäß einer Ausführungsform umfasst ein Verfahren zum Betreiben eines elektrisch antreibbaren Fahrzeugs ein Ermitteln, ob sich das Fahrzeug während einer Fahrt in einem ersten Modus, in dem es mit einer externen elektrischen Energiequelle verbunden ist, oder in einem zweiten Modus, in dem es nicht mit der externen elektrischen Energiequelle verbunden ist, befindet. Es wird ein jeweiliger erster Wert für einen Schwellenwert und/oder für einen Sollwert mindestens eines Parameters von mindestens einem Subsystem des Fahrzeugs festgelegt, wenn sich das Fahrzeug im ersten Modus befindet. Das mindestens eine Subsystem weist einen Innenraum und/oder ein Druckreservoir auf. Der Schwellenwert und/oder der Sollwert werden so festgelegt, dass im ersten Modus mehr elektrische Energie verwendet werden kann, um im Druckspeicher und/oder im Innenraum für den zweiten Modus einen entsprechenden Puffer zu schaffen, der zu einer entsprechenden Reduktion des Energiebedarfs im zweiten Modus verwendet werden kann. Wenn sich das Fahrzeug im zweiten Modus befindet, wird ein jeweiliger zweiter Wert für den Schwellenwert und/oder den Sollwert, der sich vom ersten Wert für den Schwellenwert und/oder den Sollwert unterscheidet, festgelegt. Der mindestens eine Parameter wird während der Fahrt unter Verwendung des festgelegten Schwellenwerts des mindestens einen Parameters und/oder des festgelegten Sollwerts des mindestens einen Parameters gesteuert oder geregelt.

Dies ermöglicht für elektrisch antreibbare Fahrzeuge, die während der normalen Fahrt (im ersten Modus) über eine externe elektrische Energieversorgung versorgt werden und die über einen internen Energiespeicher, typischerweise einen internen wieder aufladbaren Energiespeicher, insbesondere einen internen wieder aufladbaren elektrischen Energiespeicher bzw. Akkumulator zur Überbrückung eines Ausfalls der / einer Lücke in der externen elektrischen Energieversorgung verfügen, bei unveränderter Hardware des Fahrzeugs über ein geändertes Energiemanagement der Hilfsverbraucher die Fahrzeugreichweite beim Überbrücken (im zweiten Modus) zu erhöhen, ohne dabei den Komfort für die Passagiere einzuschränken oder nur geringfügig einzuschränken.

Da der Akkumulator typischerweise als Batterie (mit mehreren Sekundärzellen) ausgeführt ist, wird er im Folgenden dem allgemeinen Sprachgebrauch folgend verkürzend auch als Batterie bezeichnet. Analog dazu wird im Folgenden der zweite Modus auch als batteriebetriebener Modus bezeichnet.

Beim vorgeschlagen Verfahren kann ausgenutzt werden, dass viele Hilfsverbraucher von Fahrzeugen, insbesondere von Schienenfahrzeugen, einen Einschaltfaktor kleiner eins aufweisen können, d.h. sie sind nicht die ganze Zeit in Betrieb. Dies trifft zum Beispiel auf Hauptluftkompressoren von Fahrzeugen wie Schienenfahrzeuge zu, die typischerweise nur beim Unterschreiten eines unteren Grenzdruckes eines Druckbehälters, im Folgenden auch als Druckreservoir bezeichnet, insbesondere eines Druckluftbehälters (Druckluftreservoirs), zum Wiederbe- bzw. Nachfüllen des Druckbehälters aktiviert werden.

Bei dem mindestens einen Parameter kann es sich um eine Zustandsgröße eines Subsystems des Fahrzeugs handeln, insbesondere eine intensive Zustandsgröße wie den Druck eines Druckreservoirs, die Temperatur eines Fahrzeuginnenraums oder eine Gaskonzentration des Innenraums.

Durch Verwenden verschiedener Schwellenwerte bzw. Sollwerte beim Steuern bzw. Regeln im ersten Modus und zweiten Modus kann erreicht werden, dass der Einschaltfaktor des jeweiligen Hilfsverbrauchers im ersten Modus, d.h. wenn die externe Energieversorgung gewährleistet ist, erhöht und im zweiten (batteriebetriebenen) Modus erniedrigt wird. Mit anderen Worten kann eine Steuerung oder Regelung durch Verwenden verschiedener Schwellenwerte bzw. Sollwerte eine Trägheit eines mit dem jeweiligen Hilfsverbraucher verbundenen bzw. diesen umfassenden Subsystems dazu ausnutzen, den Energieverbrauch der Hilfsverbraucher im zweiten Modus abzusenken, wodurch die Reichweite des Fahrzeuges in diesem Modus erhöht werden kann.

Je nach Fahrzeugtyp und Geschwindigkeit kann der Anteil der Hilfsbetriebeverbraucher im Batteriemodus sogar über 20 % des Gesamtenergieverbrauchs liegen. Einsparungen des Energieverbrauchs im zweiten Modus können daher zu einer erheblichen Erhöhung der Fahrzeugreichweite führen.

Wenn das Subsystem des Fahrzeugs ein Druckreservoir und einen mit dem Druckreservoir verbundenen Kompressor (als Hilfsbetriebeverbraucher) aufweist, sind zudem keinerlei oder zumindest kaum Einbußen im Komfort für die Insassen eines Fahrzeugs zu erwarten, zumindest dann, wenn ein elektrisch antreibbares Schienenfahrzeug einen bekannten (noch) nicht extern versorgten Streckenabschnitt, z.B. eine oberleitungsfreien Streckenabschnitt überfährt.

Dabei kann ein oberer Schwellenwert für das Abschalten des Hauptkompressors des Schienenfahrzeugs, ein unterer Schwellenwert für das Anschalten des Hauptkompressors des Schienenfahrzeugs und/oder ein Sollwert für den Druck im Druckreservoir im zweiten Modus (Batteriemodus) niedriger als im ersten Modus (Oberleitungsmodus) gewählt werden. Beispielsweise kann der Sollwert im zweiten Modus bei einem Druck von 6 Bar und im ersten Modus bei 8 Bar liegen. Damit kann erreicht werden, dass das Schienenfahrzeug ein gut gefülltes Druckreservoir (mit einer Druckreserve) hat, wenn es in einen extern nicht versorgten Streckenabschnitt fährt. Dadurch kann zumindest im Mittel der Energieverbrauch des Hauptkompressors im zweiten Modus verringert werden. Der verringerte Energieverbrauch kann zu einer entsprechenden Verlängerung der Reichweite des Schienenfahrzeugs im zweiten Modus verwendet werden.

Dementsprechend können der Parameter ein Druck des Druckreservoirs und der Schwellenwert ein unterer Druckschwellenwert sein, wobei der erste Wert für den unteren Druckschwellenwert größer ist als der zweite Wert für den unteren Druckschwellenwert, und der Druck des Druckreservoirs unter Verwendung der beiden Schwellenwerte über den mit dem Druckreservoir verbundenen Kompressors, insbesondere eines Hauptkompressors des (Schienen-) gesteuert oder geregelt werden. Alternativ oder ergänzend kann ein erster Wert für einen oberer Druckschwellenwert im ersten Modus und ein zweiter Wert für den oberen Druckschwellenwert im zweiten Modus, der kleiner als der erste Wert für den oberen Druckschwellenwert ist, zum Steuern oder Regeln des Drucks des Druckreservoirs verwendet werden. Alternativ oder ergänzend kann auch ein erster Wert für den Sollwert des Drucks im ersten Modus, der größer als ein zweiter Wert für den Sollwert des Drucks im zweiten Modus ist, zum Steuern oder Regeln des Drucks des Druckreservoirs verwendet werden.

Ein weiteres, wichtiges Beispiel sind Klimaanlagen, die insbesondere bei sehr hohen oder niedrigen Außentemperaturen einen relativ hohen Anteil am Hilfsenergieverbrauch haben und damit ein entsprechend hohes Potential für eine Kostenverteilung der Batterie und/oder Erhöhung der Fahrzeugreichweite aufweisen können.

Im Folgenden werden Klimaanlagen auch als HVAC-Anlagen bezeichnet (von englisch: *"Heating, Ventilation and Air Conditioning").*

Über die HVAC-Anlage kann die Temperatur in Innenräumen, insbesondere Passagierabteilen des Fahrzeugs im ersten Modus so gesteuert bzw. geregelt werden, dass sie bei niedrigen Außentemperaturen von beispielsweise maximal 18 °C geringfügig gegenüber einer gewünschten Innentemperatur von beispielsweise 23 °C angehoben wird, zum Beispiel um ein bis 2K und bei hohen Außentemperaturen von beispielsweise zumindest 28 °C um ein bis 2 K gegenüber der gewünschten Innentemperatur abgesenkt wird, und im zweiten Modus so gesteuert bzw. geregelt werden, dass sie bei den niedrigen Außentemperaturen geringfügig gegenüber der gewünschten Innentemperatur von beispielsweise 23°C abgesenkt wird, zum Beispiel um ein bis 2°K und bei den hohen Außentemperaturen um ein bis 2° K gegenüber der gewünschten Innentemperatur angehoben wird.

Durch die im ersten Modus jeweils geschaffene "Temperaturreserve" kann eine Reduktion des Energieverbrauchs der HVAC-Anlage im zweiten Modus bei niedrigen Außentemperaturen (durch weniger Heizen) und/oder bei hohen Außentemperaturen (weniger Kühlen) erreicht werden.

Mit anderen Worten können zum Steuern oder Regeln in Abhängigkeit von der Außentemperatur im ersten bzw. zweiten Modus ein jeweiliger unterer Temperaturschwellenwert für die Temperatur der Luft im Innenraum als Schwellenwert, ein jeweiliger oberer Temperaturschwellenwert für die Temperatur der Luft im Innenraum als Schwellenwert und/oder ein jeweiliger Sollwert für die Temperatur der Luft im Innenraum (Innentemperatur) für die HVAC-Anlage verwendet werden.

Dabei ist der erste Wert für den unteren Temperaturschwellenwert größer als der zweite Wert für den unteren Temperaturschwellenwert, der erste Wert für den oberen Temperaturschwellenwert größer ist als der zweite Wert für den oberen Temperaturschwellenwert, und/oder der erste Wert für den Sollwert für die Temperatur größer als der zweite Wert für den Sollwert für die Temperatur, wenn eine Außentemperatur geringer als eine erste vorgebare Temperatur von beispielsweise 18 oder 20 °C ist.

Außerdem ist der erste Wert für den unteren Temperaturschwellenwert kleiner als der zweite Wert für den unteren Temperaturschwellenwert, der erste Wert für den oberen Temperaturschwellenwert kleiner als der zweite Wert für den oberen Temperaturschwellenwert, und/oder der erste Wert für den Sollwert für die Temperatur kleiner als der zweite Wert für den Sollwert für die Temperatur, wenn eine Außentemperatur geringer als eine erste vorgebare Temperatur ist.

Dementsprechend umfasst das Verfahren typischerweise ein Messen der Außentemperatur des Fahrzeugs.

Wenn bei der Steuerung bzw. Regelung der Innentemperatur die Bandbreite der Innenraumtemperaturschwankungen auf einen Bereich +- 1 K beschränkt wird, ist der Einfluss auf den Komfort für Passagiere und Personal praktisch unbedeutend.

Aber selbst bei einer zugelassenen Bandbreite der Innenraumtemperaturschwankungen zwischen den beiden Modi im Bereich von +-2 K wird der Komfort nur in einer erträglichen Weise eingeschränkt.

Außerdem kann zur Verringerung etwaiger Komforteinbußen vorgesehen sein, dass die Temperaturreserve im ersten Modus für den zweiten Modus nur in einem beschränkten Zeitintervall aufgebaut wird, das (unmittelbar) vor einem geplanten zweiten Modus liegt, zum Beispiel dann, wenn sich das Schienenfahrzeug einem zu durchfahrenden oberleitungsfreien Streckenabschnitt nähert.

Dementsprechend kann vorgesehen sein, den jeweiligen ersten Wert in Abhängigkeit eines erwarteten Zeitpunkts des Eintreffens des Fahrzeugs am oberleitungsfreien Streckenabschnitt (nicht versorgten Streckenabschnitt), in Abhängigkeit von einer Geschwindigkeit des Fahrzeugs und/oder einer oder mehrerer Ortsdaten des Fahrzeugs, die beispielsweise per GPS ermittelt werden, anzupassen.

Beispielsweise kann vorgesehen sein, den Temperatursollwert im ersten Modus gegenüber dem (an sich) gewünschten Sollwert der Innentemperatur von beispielsweise 23°C bei niedrigen Außentemperaturen erst anzuheben und/oder bei hohen Außentemperaturen erst abzusenken, wenn die erwartete verbleibende Fahrzeit des Fahrzeugs bis zum Eintreffen am oberleitungsfreien Streckenabschnitt unterhalb eines Zeitschwellenwertes von beispielsweise 10 oder 20 Minuten fällt.

Alternativ oder ergänzend kann aber auch eine CO₂-Konzentration in Innenräumen, insbesondere Passagierabteilen des Fahrzeugs über die HVAC-Anlage entsprechend gesteuert oder geregelt werden.

Dementsprechend kann der Schwellenwert ein CO₂-Konzentrationsschwellenwert sein, wobei der erste Wert für den CO₂-Konzentrationsschwellenwert (für den ersten Modus) kleiner ist als der zweite Wert für den CO₂-Konzentrationsschwellenwert (für den zweiten Modus). Alternativ oder ergänzend kann auch ein erster Wert für den Sollwert der CO₂-Konzentration für den ersten Modus und für den zweiten Modus ein zweiter Wert für den Sollwert der CO₂-Konzentration zum Steuern oder Regeln der CO₂-Konzentration verwendet werden.

Etwaige Einbußen im Komfort sind dabei typischerweise noch einmal deutlich geringer als bei der vorgeschlagenen Temperaturregelung. Dies liegt daran, dass Änderungen der CO₂-Konzentration für Personen nicht so stark wahrnehmbar sind. Bei starker Besetzung des Fahrzeuges kann sogar eine CO₂-Konzentration von 5000 ppm zulässig sein. Während des zweiten Modus kann der Sollwert der CO₂-Konzentration beispielsweise in einem Bereich von 2000 ppm bis 5000 ppm, typischer in einem Bereich von 2500 ppm bis 5000 ppm und sogar noch typischer in einem Bereich von 3000 ppm bis 5000 ppm liegen, während der Sollwert der CO₂-Konzentration in ersten Modus in einem Bereich von 1000 ppm -1400 ppm, typischer in einem Bereich von 1100 ppm bis 1300 ppm liegt, zum Beispiel bei 1200 ppm.

Anhand von Simulationen hat sich herausgestellt, dass für typische Schienenfahrzeuge im Personenverkehr allein über die reduzierte Frischluftzufuhr im zweiten Modus (durch angehobenen CO2-Sollwert) kann bis über 30 % Energie eingespart werden kann.

Außerdem kann insbesondere dann, wenn sich das Schienenfahrzeug einem oberleitungsfreien Streckenabschnitt nähert, vorgesehen sein, den oberen Schwellenwert und/oder den Sollwert für die CO₂-Konzentrations im ersten Modus weiter herunterzusetzen, zum Beispiel auf einen Wert unter 1000 ppm und mittels starker Frischluftzufuhr ("Spülbetrieb") im Innenraum einen CO₂-Puffer (Sauerstoffreserve) für den zweiten Modus aufzubauen.

Weiterhin kann vorgesehen sein, die jeweiligen ersten und/oder zweiten Werte entsprechend einer Passagieranzahl in jeweiligen Räumen, Abteilen und/oder Waggons anzupassen.

Gemäß einer Ausführungsform umfasst ein Fahrzeug einen elektrischen Antrieb, einen mit dem elektrischen Antrieb verbundenen elektrischen Energiespeicher, insbesondere einen Akkumulator, einen mit elektrischen Antrieb und/oder dem elektrischen Energiespeicher verbundenen Anschluss für eine externe elektrische Energiequelle (Energieversorgungseinrichtung), insbesondere einen Anschluss für eine Oberleitung oder eine Stromschiene, mindestens ein Subsystem, und eine Steuer- oder Regeleinheit, die eingerichtet ist, zu ermitteln, ob sich das Fahrzeug in einem ersten Modus befindet, in dem der elektrische Antrieb und/oder der elektrischen Energiespeicher über den Anschluss mit elektrischer Energie versorgt werden. Außerdem ist die Steuer- oder Regeleinheit eingerichtet, mindestens einen Parameters des mindestens einen Subsystems unter Verwendung eines Schwellenwerts für den mindestens einen Parameters und/oder eines Sollwerts für den mindestens einen Parameters zu steuern oder zu regeln, wobei für den Schwellenwert des mindestens einen Parameters und/oder den Sollwert des mindestens einen Parameters ein jeweiliger erster Wert verwendet wird, wenn sich das Fahrzeug im ersten Modus befindet, und wobei für den Schwellenwert des mindestens einen Parameters und/oder den Sollwert des mindestens einen Parameters ein vom jeweiligen ersten Wert verschiedener jeweiliger zweiter Wert verwendet wird, wenn sich das Fahrzeug nicht im ersten Modus befindet.

Dazu ist die Steuer- oder Regeleinheit typischerweise mit einem jeweiligen Sensor des mindestens einen Subsystems zum Ermitteln eines jeweiligen Istwerts für den mindestens einen Parameter verbunden.

Bei dem mindestens einen Parameter kann es sich um einen Druck, insbesondere einen Druck eines Druckreservoir aus, eine Temperatur, insbesondere eine Innenraumtemperatur oder eine Konzentration, insbesondere eine CO₂-Konzentration eines Innenraums handeln.

Außerdem kann die Steuer-oder Regeleinheit eingerichtet sein mehrere Parameter eines Subsystems und/oder Parameter mehrerer Subsysteme entsprechend zu steuern oder zu regeln.

Typischerweise wird für den Schwellenwert des mindestens einen Parameters und/oder den Sollwert des mindestens einen Parameters der jeweilige zweite Wert verwendet, wenn sich das Fahrzeug in einem vom elektrischen Energiespeicher gespeisten zweiten Modus befindet.

Bei dem Fahrzeug handelt es sich typischerweise um ein Schienenfahrzeug, insbesondere ein Schienenfahrzeug für den Personentransport.

Es kann sich aber auch um einen Oberleitungsbus oder ein Straßenfahrzeug handeln, dass über in und/oder an der Fahrbahn angeordnete Spulen während der Fahrt induktiv mit Energie versorgt werden kann, zum Beispiel einen entsprechenden Bus.

Typischerweise ist das jeweilige Subsystem mit einem elektrisch angetriebenen Hilfsbetriebverbraucher verbunden, der seinerseits mit der Steuer- oder Regeleinheit verbunden ist. Dabei können die jeweiligen Parameter mittels des Hilfsverbrauchers (als Stellglied) gesteuert oder geregelt werden.

Das Fahrzeug kann ein Subsystem aufweisen, das einen Innenraum, insbesondere einen Innenraum für Passagiere aufweist.

Außerdem kann das Fahrzeug eine Heizung für den Innenraum und/oder eine Belüftungsanlage für den Innenraum aufweisen.

insbesondere kann das Fahrzeug eine mit dem Innenraum verbundene Klimaanlage aufweisen.

Alternativ oder ergänzend kann das Fahrzeug ein (weiteres) Subsystem aufweisen, das ein Druckreservoir und einen mit dem Druckreservoir verbundenen Kompressor aufweist, der mit der Steuer- oder Regeleinheit verbunden ist.

Typischerweise ist die Steuer- oder Regeleinheit eingerichtet, die hierin beschriebenen Verfahren auszuführen.

Die vorstehend beschriebenen Ausführungsformen können beliebig miteinander kombiniert werden.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend ähnliche Teile.

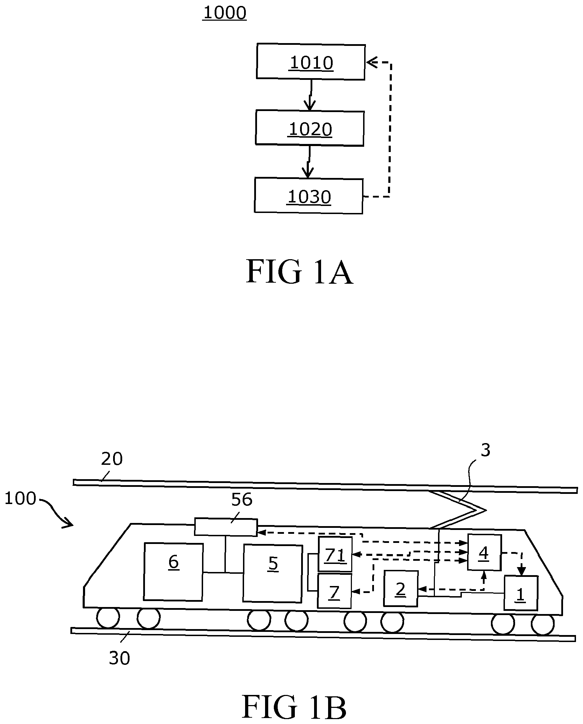

Figur 1A zeigt ein Blockdiagramm eines Verfahrens zum Betreiben eines elektrisch antreibbaren Fahrzeugs gemäß einem Ausführungsbeispiel.
Figur 1B zeigt eine schematische Darstellung eines Schienenfahrzeugs gemäß einem Ausführungsbeispiel.

### Ausführungsbeispiele

Figur 1A illustriert Schritte eines Verfahrens 1000 zum Betreiben eines elektrisch antreibbaren Fahrzeugs, insbesondere eines elektrisch antreibbaren Schienenfahrzeugs.

In einem ersten Block 1010 wird ermittelt, ob sich das Fahrzeug während der Fahrt in einem ersten Modus, in dem es mit einer externen elektrischen Energiequelle, zum Beispiel einer stromführenden Oberleitung oder einer stromführenden Stromschiene verbunden ist, oder in einem zweiten Modus, in dem es von einem internen elektrischen Energiespeicher versorgt wird, befindet.

Anschließend kann in einem Block 1020 in Abhängigkeit vom ermittelten Modus für einen oder mehrere Parameter des Fahrzeugs bzw. eines oder sogar mehrere Subsysteme des Fahrzeugs ein jeweiliger oberer Schwellenwert, unterer Schwellenwert und/oder Sollwert festgelegt werden.

Insbesondere kann ein jeweiliger vorbestimmter erster Wert dem Schwellenwert / den Schwellenwerten bzw. dem Sollwert des jeweiligen Parameters zugewiesen werden, wenn sich das Fahrzeug im ersten Modus befindet, und ein jeweiliger vorbestimmter vom ersten Wert verschiedener zweiter Wert dem Schwellenwert / den Schwellenwerten bzw. dem Sollwert des jeweiligen Parameters zugewiesen werden, wenn sich das Fahrzeug im zweiten Modus befindet.

Anschließend kann in einem Block 1030 der bzw. die Parameter unter Verwendung des jeweils zugewiesenen Schwellenwerts / der jeweils zugewiesenen Schwellenwerte bzw. des jeweils zugewiesenen Sollwert gesteuert oder sogar geregelt werden.

Wie in Figur 1A durch den gestrichelten Pfeil dargestellt wird, kann das Verfahren mehrfach zyklisch wiederholt werden.

Insbesondere können durch das Verfahren die Temperatur T und/oder die CO₂-Konzentration in Innenräumen, beispielsweise Abteilen bzw. Waggons geregelt werden.

Alternativ oder ergänzend kann der Druck in einem Druckreservoir des Fahrzeugs entsprechend geregelt werden. Dabei werden im Block 1020 die jeweiligen ersten und zweiten Werte für die Temperatur T, die CO₂-Konzentration und oder den Druck p typischerweise so gewählt wie dies oben erläutert wurde. Dies ermöglicht den Aufbau eines entsprechenden Puffers im ersten Modus für den zweiten Modus, so dass der Energieverbrauch für die bei der Regelung verwendeten Hilfsverbraucher im zweiten Modus verringert werden kann.

Figur 1B zeigt ein exemplarisches Schienenfahrzeug 100 während der Fahrt auf einer Schiene 30 in einer schematischen Seitenansicht. Bei dem Schienenfahrzeug 100 kann es sich um einen Personenzug handeln.

Bei dem Schienenfahrzeug 100 kann es sich auch um ein mehrgliedriges Schienenfahrzeug handeln. Aus Gründen der Einfachheit wird in Figur 1B jedoch nur ein Fahrzeugabschnitt dargestellt, der zum Beispiel einen Triebwagen darstellen kann.

Der dargestellte Schienenfahrzeugabschnitt ist über einen Pantograph 3 mit einer Oberleitung 20 verbunden.

Gemäß einem nicht dargestellten Ausführungsbeispiel hat das Schienenfahrzeug einen zweiten Stromabnehmer für eine Stromschiene.

In dem dargestellten exemplarischen Ausführungsbeispiel hat das Schienenfahrzeug 100 eine elektrische Antriebseinheit 1 und einen mit der elektrischen Antriebseinheit 1 verbundenen Akkumulator 2 als elektrischen Energiespeicher, die elektrisch beide mit dem Pantographen 3 verbunden bzw. über nicht dargestellte Schalter verbindbar sind.

Außerdem hat das Schienenfahrzeug 100 eine Steuer - oder Regeleinheit 4, die über entsprechende Datenverbindungen, zum Beispiel Datenleitungen mit der elektrischen Antriebseinheit 1 und dem Akkumulator 2 verbunden ist, wie das durch die entsprechenden gestrichelten Pfeile in Figur 1B dargestellt wird.

Außerdem ist die Steuer- oder Regeleinheit 4 typischerweise auch mit einem nicht dargestellten Sensor zum Ermitteln eines Versorgungszustandes des Fahrzeugs 100 mit elektrischer Energie über den Pantographen 3 ausgestattet. Anhand der Daten dieses Sensors und/oder eines Streckenplans (mit verzeichneten Unterbrechungen der Oberleitung) und aktuellen Ortskoordinaten bzw. Positionsdaten des Schienenfahrzeugs 100 auf der Schiene 20, kann die Steuer- oder Regeleinheit 4 ermitteln, ob sich das Fahrzeug 100 in einem ersten Modus befindet, in dem der elektrische Antrieb 2 und der elektrische Energiespeicher über den Pantographen mit externer elektrischer Energie versorgt werden, oder ob sich das Fahrzeug 100 im zweiten Modus befindet, in dem die Versorgung mit elektrischer Energie vom Akkumulator 2 bereitgestellt wird.

Das dargestellte Schienenfahrzeug 100 weist weiterhin ein Druckreservoir 7 zur hydraulischen Versorgung des Schienenfahrzeug und einen mit dem Druckreservoir 7 verbundenen Kompressor 71 zur Versorgung des Druckreservoirs 7 mit komprimierter Luft auf, die beide über entsprechende Datenverbindungen mit der Steuer - oder Regeleinheit 4 verbunden sind.

Beispielsweise kann die Steuer - oder Regeleinheit 4 mit einem Drucksensor zum Ermitteln eines Istwerts des Drucks p im Druckreservoirs 7 verbunden sein und von ihm über die entsprechende Datenverbindungen ermittelte Istwerte des Drucks erhalten. Außerdem ist die Steuer - oder Regeleinheit 4 typischerweise zumindest eingerichtet, den Kompressor 71 an- sowie abzuschalten.

Je nachdem, ob sich das Schienenfahrzeug 100 im ersten oder zweiten Modus befindet, wird die Steuer- oder Regeleinheit 4 andere Schwellenwerte bzw. einen anderen Sollwert für den Druck p des Druckreservoirs 71 verwenden, nämlich wie oben erläutert im ersten Modus einen im Vergleich zum zweiten Modus jeweiligen höheren Wert. Damit kann im ersten Modus im Druckreservoir ein Druck-bzw. Energievorrat für den zweiten Modus aufgebaut werden.

In dem exemplarischen Ausführungsbeispiel weist das Schienenfahrzeug 100 zudem eine Klimaanlage 56 zur Klimatisierung der exemplarischen beiden Innenräume 5, 6 auf. Bei den Innenräumen 5, 6 kann es sich beispielsweise um Passagierabteile handeln.

Die Klimaanlage 56 ist mit der Steuer - oder Regeleinheit 4 über eine entsprechende Datenverbindung verbunden.

Die in Figur 1B dargestellten gestrichelten Pfeile können separate Datenverbindungen oder Datenverbindung eines gemeinsamen Datenbusses darstellen.

Aus Gründen der Übersichtlichkeit wird in Figur 1B auf die explizite Darstellung von Sensoren der Klimaanlage 56 bzw. Sensoren für die Klimaanlage 56 in den Innenräumen 5, 6 und deren Datenverbindung(en) zur Klimaanlage 56 bzw. der Steuer - oder Regeleinheit 4 verzichtet.

Außerdem wird aus Gründen der Übersichtlichkeit in Figur 1B auch auf die Darstellung eines typischerweise vorhandenen Temperatursensors für die Außenluft sowie die Datenverbindung(en) zur Klimaanlage 56 bzw. der Steuer - oder Regeleinheit 4 verzichtet. Dieser Temperatursensor kann wie die Temperatur- und CO₂-Sensoren der Innenräume 5, 6 Teil der Klimaanlage 56 sein.

Insbesondere kann die Klimaanlage 56 eingerichtet sein, eine jeweilige Temperatur und eine jeweilige CO₂-Konzentration in den Innenräumen 5, 6 einzustellen bzw. sogar zu regeln. Dazu kann die Klimaanlage 56 eine Belüftungsanlage und eine Heizung aufweisen.

Je nachdem, ob sich das Schienenfahrzeug 100 im ersten oder zweiten Modus befindet, kann die Steuer- oder Regeleinheit 4 andere Schwellenwerte bzw. einen anderen Sollwert für die Temperatur und die CO₂-Konzentration in den Innenräumen 5, 6 an die Klimaanlage 56 übermitteln.

Wie oben erläutert wurde, werden die Schwellenwerte und/oder Sollwerte dabei typischerweise so gewählt, dass im ersten Modus mehr elektrische Energie verwendet wird, um im Druckspeicher 7 und/oder den Innenräumen 5, 6 sowie der Klimaanlage 56 für den zweiten Modus einen entsprechenden Puffer zu schaffen, der zu einer entsprechenden Reduktion des Energiebedarfs im zweiten Modus verwendet werden kann.

Wie oben weiter erläutert wurde, werden die Schwellenwerte bzw. der Sollwert für die Temperatur in den Innenräumen 5, 6 von der Steuer- oder Regeleinheit 4 zudem typischerweise in Abhängigkeit von der ermittelten Außentemperatur gewählt, um bei niedrigen Außentemperaturen im ersten Modus einen Wärmepuffer/Wärmeüberschuss in den Innenräumen 5, 6 für den zweiten Modus zu erzeugen, und bei hohen Außentemperaturen im ersten Modus eine leichte Unterkühlung (negativen Wärmepuffer/Wärmedefizit) in den Innenräumen 5, 6 für den zweiten Modus zu erzeugen.

Es versteht sich, dass die hierin beschriebenen Steuerungs- bzw. Regelungsfunktionen von einer Fahrzeugsteuerung des Fahrzeugs 100 oder einer Steuereinheit der Klimaanlage 54 teil- bzw. ganz übernommen werden kann. Dementsprechend kann die Steuer- oder Regeleinheit 4 auch von der Fahrzeugsteuerung und der Steuereinheit der Klimaanlage 54 gebildet werden.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne den Schutzbereich der vorliegenden Ansprüche zu verlassen.

### Bezugszeichenliste

- 1: elektrischer Antrieb
- 2: elektrischen Energiespeicher
- 3: Anschluss (Pantograph, Seitenstromabnehmer)
- 4: Steuer- oder Regeleinheit
- 5, 6: Subsystem, Innenraum
- 7: Subsystem, Druckreservoir
- 20: Oberleitung
- 30: Schiene
- 56: Klimaanlage
- 71: Kompressor

## Patentansprüche

1. Verfahren (1000) zum Betreiben eines elektrisch antreibbaren Fahrzeugs (100), aufweisend:
- Ermitteln, ob sich das Fahrzeug (100) während einer Fahrt in einem ersten Modus, in dem es mit einer externen elektrischen Energiequelle verbunden ist, oder in einem zweiten Modus, in dem es nicht mit der externen elektrischen Energiequelle verbunden ist, befindet;
- Festlegen eines jeweiligen ersten Werts für einen Schwellenwert und/oder einen Sollwert mindestens eines Parameters (T, c, p) von mindestens einem Subsystem (5, 6, 7) des Fahrzeugs (100), wenn sich das Fahrzeug (100) im ersten Modus befindet, und Festlegen eines jeweiligen zweiten Werts für den Schwellenwert und/oder den Sollwert, der sich vom ersten Wert für den Schwellenwert und/oder den Sollwert unterscheidet, wenn sich das Fahrzeug (100) im zweiten Modus befindet, wobei das mindestens eine Subsystem (5, 6, 7) einen Innenraum (5, 6) und/oder ein Druckreservoir (7) aufweist, und wobei der Schwellenwert und/oder der Sollwert so festgelegt werden, dass im ersten Modus mehr elektrische Energie verwendet werden kann, um im Druckreservoir (7) und/oder im Innenraum (5, 6) für den zweiten Modus einen entsprechenden Puffer zu schaffen, der zu einer entsprechenden Reduktion des Energiebedarfs im zweiten Modus verwendet werden kann; und
- Steuern oder Regeln des mindestens einen Parameters (T, c, p) während der Fahrt unter Verwendung des Schwellenwerts des mindestens einen Parameters (T, c, p) und/oder des Sollwerts des mindestens einen Parameters (T, c, p).

2. Verfahren (1000) nach Anspruch 1, wobei der mindestens eine Parameter eine CO₂-Konzentration (c) der Luft im Innenraum und/oder eine Temperatur (T) der Luft im Innenraum aufweist, und/oder wobei das Steuern oder Regeln unter Verwendung einer mit dem Innenraum verbundenen Klimaanlage (56) des Fahrzeugs (100), einer Heizung für den Innenraum und/oder einer Belüftungsanlage für den Innenraum erfolgt.

3. Verfahren (1000) nach Anspruch 2, wobei der Schwellenwert ein CO₂-Konzentrationsschwellenwert ist, wobei der erste Wert für den CO₂-Konzentrationsschwellenwert kleiner ist als der zweite Wert für den CO₂-Konzentrationsschwellenwert, und/oder wobei der erste Wert für den Sollwert der CO₂-Konzentration (c) kleiner ist als der zweite Wert für den Sollwert der CO₂-Konzentration (c).

4. Verfahren (1000) nach Anspruch 2 oder 3, wobei der Schwellenwert ein unterer Temperaturschwellenwert für die Temperatur (T) der Luft im Innenraum ist, und/oder wobei der Schwellenwert ein oberer Temperaturschwellenwert für die Temperatur (T) der Luft im Innenraum ist.

5. Verfahren (1000) nach Anspruch 2 oder 4, wobei der erste Wert für den unteren Temperaturschwellenwert größer ist als der zweite Wert für den unteren Temperaturschwellenwert, wobei der erste Wert für den oberen Temperaturschwellenwert größer ist als der zweite Wert für den oberen Temperaturschwellenwert, wobei der erste Wert für den Sollwert für die Temperatur (T) der Luft im Innenraum größer als der zweite Wert für den Sollwert für die Temperatur (T) der Luft im Innenraum, wenn eine Außentemperatur geringer als eine erste vorgebare Temperatur ist und/oder wobei das Verfahren ein Bestimmen der Außentemperatur umfasst.

6. Verfahren (1000) nach Anspruch 2, 4 oder 5, wobei der erste Wert für den unteren Temperaturschwellenwert kleiner ist als der zweite Wert für den unteren Temperaturschwellenwert, wobei der erste Wert für den oberen Temperaturschwellenwert kleiner ist als der zweite Wert für den oberen Temperaturschwellenwert, und/oder wobei der erste Wert für den Sollwert für die Temperatur (T) der Luft im Innenraum kleiner als der zweite Wert für den Sollwert für die Temperatur (T) der Luft im Innenraum, wenn eine Außentemperatur höher als eine erste vorgebare Temperatur ist.

7. Verfahren (1000) nach einem der vorhergehenden Ansprüche wobei der mindestens eine Parameter einen Druck (p) des Druckreservoirs (7) aufweist, wobei der Schwellenwert ein unterer Druckschwellenwert ist, wobei der erste Wert für den unteren Druckschwellenwert größer ist als der zweite Wert für den unteren Druckschwellenwert, wobei der Schwellenwert ein oberer Druckschwellenwert ist, wobei der erste Wert für den oberen Druckschwellenwert größer ist als der zweite Wert für den oberen Druckschwellenwert, wobei der erste Wert für den Sollwert des Drucks (p) größer ist als der zweite Wert für den Sollwert für den Sollwert des Drucks (p), und/oder wobei das Steuern oder Regeln unter Verwendung eines mit dem Druckreservoir (7) verbundenen Kompressors (71) des Schienenfahrzeugs (100) erfolgt.

8. Fahrzeug (100), aufweisend:
- einen elektrischen Antrieb (1);
- einen mit dem elektrischen Antrieb (1) verbundenen elektrischen Energiespeicher (2);
- einen mit elektrischen Antrieb (1) und/oder dem elektrischen Energiespeicher (2) verbundenen Anschluss (3) für eine externe Energiequelle, insbesondere eine Oberleitung (20) oder eine Stromschiene;
- mindestens ein Subsystem (5, 6, 7) aufweisend einen Innenraum (5, 6) und/oder ein Druckreservoir (7); und
- eine Steuer- oder Regeleinheit (4), die eingerichtet ist,
zu ermitteln, ob sich das Fahrzeug in einem ersten Modus befindet, in dem der elektrische Antrieb (1) und/oder der elektrischen Energiespeicher (2) über den Anschluss (3) mit elektrischer Energie versorgt werden; und
mindestens einen Parameters (T, c, p) des Subsystems (5, 6, 7) unter Verwendung eines Schwellenwerts für den mindestens einen Parameters (T, c, p) und/oder eines Sollwerts für den mindestens einen Parameters (T, c, p) zu steuern oder zu regeln, wobei für den Schwellenwert des mindestens einen Parameters (T, c, p) und/oder den Sollwert des mindestens einen Parameters (T, c, p) ein jeweiliger erster Wert verwendet wird, wenn sich das Fahrzeug im ersten Modus befindet, und wobei für den Schwellenwert des mindestens einen Parameters (T, c, p) und/oder den Sollwert des mindestens einen Parameters (T, c, p) ein vom jeweiligen ersten Wert verschiedener jeweiliger zweiter Wert verwendet wird, wenn sich das Fahrzeug nicht im ersten Modus befindet, so dass im ersten Modus mehr elektrische Energie verwendet werden kann, um im Druckreservoir (7) und/oder im Innenraum (5, 6) für den zweiten Modus einen entsprechenden Puffer zu schaffen, der zu einer entsprechenden Reduktion des Energiebedarfs im zweiten Modus verwendet werden kann.

9. Fahrzeug (100) nach Anspruch 8, wobei für den Schwellenwert des mindestens einen Parameters (T, c, p) und/oder den Sollwert des mindestens einen Parameters (T, c, p) der jeweilige zweite Wert verwendet wird, wenn sich das Fahrzeug in einem vom elektrischen Energiespeicher (2) gespeisten zweiten Modus, insbesondere einem Akkumulator gespeisten zweiten Modus befindet, wobei das Fahrzeug ein Schienenfahrzeug ist, wobei das mindestens eine Subsystem mit einen elektrischen Hilfsbetriebeverbraucher (56, 71) verbunden ist, wobei das Fahrzeug eine Heizung für den Innenraum aufweist, wobei das Fahrzeug eine Belüftungsanlage für den Innenraum aufweist, wobei das Fahrzeug eine mit dem Innenraum verbundene Klimaanlage (56) aufweist, und/oder wobei das Fahrzeug einen mit dem Druckreservoir verbundenen Kompressor (71) aufweist.

10. Fahrzeug (100) nach Anspruch 8 oder 9, wobei die Steuer- oder Regeleinheit (4) eingerichtet ist, ein Verfahren nach einem der Ansprüche 2 bis 7 auszuführen.

## Claims

1. A method (1000) for operating an electrically drivable vehicle (100), comprising:
- determining whether, during a journey, the vehicle (100) is in a first mode in which it is connected to an external electrical power source or in a second mode in which it is not connected to the external electrical power source;
- setting a respective first value for a threshold value and/or a setpoint value of at least one parameter (T, c, p) of at least one subsystem (5, 6, 7) of the vehicle (100) when the vehicle (100) is in the first mode, and setting a respective second value for the threshold value and/or the setpoint value which differs from the first value for the threshold value and/or the setpoint value when the vehicle (100) is in the second mode, wherein the at least one subsystem (5, 6, 7) comprises an interior space (5, 6) and/or a pressure reservoir (7), and wherein the threshold value and/or the setpoint value are set such that in the first mode more electrical energy can be used to create in the pressure reservoir (7) and/or in the interior space (5, 6) for the second mode a corresponding buffer which can be used for a respective reduction of an energy demand in the second mode ; and
- controlling or regulating the at least one parameter (T, c, p) while driving using the threshold value of the at least one parameter (T, c, p) and/or the setpoint value of the at least one parameter (T, c, p).

2. The method (1000) according to claim 1, wherein the at least one parameter comprises a CO₂ concentration (c) of the air in the interior space and/or a temperature (T) of the air in the interior space, and/or wherein the controlling or regulating is performed using an air conditioning system (56) of the vehicle (100) connected to the interior space, a heating system for the interior space and/or a ventilation system for the interior space.

3. The method (1000) according to claim 2, wherein the threshold value is a CO₂ concentration threshold value, wherein the first value for the CO₂ concentration threshold value is smaller than the second value for the CO₂ concentration threshold value, and/or wherein the first value for the CO₂ concentration set point value (c) is smaller than the second value for the CO₂ concentration set point value (c).

4. The method (1000) according to claim 2 or 3, wherein the threshold is a lower temperature threshold for the temperature (T) of the air in the interior space, and/or wherein the threshold is an upper temperature threshold for the temperature (T) of the air in the interior space.

5. The method (1000) according to claim 2 or 4, wherein the first value for the lower temperature threshold is greater than the second value for the lower temperature threshold, wherein the first value for the upper temperature threshold is greater than the second value for the upper temperature threshold, wherein the first value for the setpoint for the temperature (T) of the air in the indoor space is greater than the second value for the setpoint for the temperature (T) of the air in the interior space when an outside temperature is less than a first predeterminable temperature and/or wherein the method comprises determining the outdoor temperature.

6. The method (1000) according to claim 2, 4 or 5, wherein the first value for the lower temperature threshold is smaller than the second value for the lower temperature threshold, wherein the first value for the upper temperature threshold is smaller than the second value for the upper temperature threshold, and/or wherein the first value for the setpoint for the temperature (T) of the air in the interior space is smaller than the second value for the setpoint for the temperature (T) of the air in the interior space when an outside temperature is higher than a first predeterminable temperature.

7. The method (1000) according to any one of the preceding claims, wherein the at least one parameter comprises a pressure (p) of the pressure reservoir (7), wherein the threshold value is a lower pressure threshold value, wherein the first value for the lower pressure threshold value is greater than the second value for the lower pressure threshold value, wherein the threshold value is an upper pressure threshold value, wherein the first value for the upper pressure threshold value is greater than the second value for the upper pressure threshold value, wherein the first value for the setpoint value of the pressure (p) is greater than the second value for the setpoint value for the setpoint value of the pressure (p), and/or wherein the controlling or regulating is performed using a compressor (71) of the rail vehicle (100) connected to the pressure reservoir (7).

8. A vehicle (100) comprising:
- an electric drive (1);
- an electrical energy storage (2) connected to the electrical drive (1);
- a connector (3) connected to the electric drive (1) and/or the electric energy storage (2) for an external energy source, in particular an overhead line (20) or a conductor rail;
- at least one subsystem (5, 6, 7) comprising an interior space (5, 6) and/or a pressure reservoir (7); and
- a control or regulating unit (4) configured to,
determine whether the vehicle is in a first mode in which the electric drive (1) and/or the electric energy storage (2) are supplied with electric energy via the connector (3); and
control or regulate at least one parameter (T, c, p) of the subsystem (5, 6, 7) using a threshold value for the at least one parameter (T, c, p) and/or a setpoint value for the at least one parameter (T, c, p), wherein a respective first value is used for the threshold value of the at least one parameter (T, c, p) and/or the setpoint value of the at least one parameter (T, c, p) when the vehicle is in the first mode, and wherein a respective second value different from the respective first value is used for the threshold value of the at least one parameter (T, c, p) and/or the setpoint value of the at least one parameter (T, c, p) when the vehicle is not in the first mode, so that more electrical energy can be used in the first mode to create a corresponding buffer in the pressure reservoir (7) and/or in the interior space (5, 6) for the second mode, which buffer can be used for a corresponding reduction of an energy demand in the second mode.

9. Vehicle (100) according to claim 8, wherein the respective second value is used for the threshold value of the at least one parameter (T, c, p) and/or the setpoint value of the at least one parameter (T, c, p) when the vehicle is in a second mode fed by the electrical energy storage device (2), in particular fed by an accumulator in the second mode, wherein the vehicle is a rail vehicle, wherein said at least one subsystem is connected to an auxiliary electrical load (56, 71), wherein said vehicle comprises a heating system for the interior space, wherein said vehicle comprises a ventilation system for the interior space , wherein said vehicle comprises an air conditioning system (56) connected to the interior space, and/or wherein said vehicle comprised a compressor (71) connected to said pressure reservoir.

10. The vehicle (100) according to claim 8 or 9, wherein the control or regulating unit (4) is configured to perform a method according to any one of claims 1 to 7.

## Revendications

1. Procédé (1000) de fonctionnement d'un véhicule (100) à entraînement électrique, comprenant ce qui suit :
- la détermination si, pendant une conduite, le véhicule (100) est dans un premier mode, dans lequel il est relié à une source d'énergie électrique externe, ou dans un deuxième mode, dans lequel il n'est pas relié à la source d'énergie électrique externe ;
- la définition d'une première valeur respective pour une valeur seuil et/ou une valeur de consigne d'au moins un paramètre (T, c, p) d'au moins un sous-système (5, 6, 7) du véhicule (100) lorsque le véhicule (100) est dans le premier mode, et la définition d'une deuxième valeur respective pour la valeur seuil et/ou la valeur de consigne, laquelle diffère de la première valeur pour la valeur seuil et/ou la valeur de consigne lorsque le véhicule (100) est dans le deuxième mode, dans lequel l'au moins un sous-système (5, 6, 7) comprend un habitacle (5, 6) et/ou un réservoir de pression (7), et dans lequel la valeur seuil et/ou la valeur de consigne sont définies de telle sorte que, dans le premier mode, plus d'énergie électrique peut être utilisée pour créer un tampon correspondant dans le réservoir de pression (7) et/ou l'habitacle (5, 6) pour le deuxième mode, lequel tampon peut être utilisé pour une réduction correspondante du besoin énergétique dans le deuxième mode ; et
- la commande ou la régulation de l'au moins un paramètre (T, c, p) pendant la conduite en utilisant la valeur seuil de l'au moins un paramètre (T, c, p) et/ou la valeur de consigne de l'au moins un paramètre (T, c, p).

2. Procédé (1000) selon la revendication 1, dans lequel l'au moins un paramètre présente une concentration en CO₂ (c) de l'air dans l'habitacle et/ou une température (T) de l'air dans l'habitacle, et/ou dans lequel la commande ou la régulation est effectuée au moyen d'une installation de climatisation (56) du véhicule (100), reliée à l'habitacle, d'un chauffage pour l'habitacle et/ou d'une installation d'aération pour l'habitacle.

3. Procédé (1000) selon la revendication 2, dans lequel la valeur seuil est une valeur seuil de concentration en CO₂, dans lequel la première valeur pour la valeur seuil de concentration en CO₂ est inférieure à la deuxième valeur de la valeur seuil de concentration en CO₂, et/ou dans lequel la première valeur pour la valeur de consigne de la concentration en CO₂ (c) est inférieure à la deuxième valeur pour la valeur de consigne de la concentration en CO₂ (c).

4. Procédé (1000) selon la revendication 2 ou 3, dans lequel la valeur seuil est une valeur seuil de température inférieure pour la température (T) de l'air dans l'habitacle, et/ou dans lequel la valeur seuil est une valeur seuil de température supérieure pour la température (T) de l'air dans l'habitacle.

5. Procédé (1000) selon la revendication 2 ou 4, dans lequel la première valeur de la valeur seuil de température inférieure est supérieure à la deuxième valeur de la valeur seuil de température inférieure, dans lequel la première valeur pour la valeur seuil de température supérieure est supérieure à la deuxième valeur de la valeur seuil de température supérieure, dans lequel la première valeur pour la valeur de consigne de la température (T) de l'air dans l'habitacle est supérieure à la deuxième valeur pour la valeur de consigne de la température (T) de l'air dans l'habitacle si une température extérieure est inférieure à une première température prédéterminable, et/ou dans lequel le procédé comprend la détermination de la température extérieure.

6. Procédé (1000) selon la revendication 2, 4 ou 5, dans lequel la première valeur de la valeur seuil de température inférieure est inférieure à la deuxième valeur de la valeur seuil de température inférieure, dans lequel la première valeur de la valeur seuil de température supérieure est inférieure à la deuxième valeur de la valeur seuil de température supérieure, dans lequel et/ou la première valeur pour la valeur de consigne de la température (T) de l'air dans l'habitacle est inférieure à la deuxième valeur pour la valeur de consigne de la température (T) de l'air dans l'habitacle lorsqu'une température extérieure est supérieure à une première température prédéterminable.

7. Procédé (1000) selon l'une quelconque des revendications précédentes, dans lequel l'au moins un paramètre comprend une pression (p) du réservoir de pression (7), dans lequel la valeur seuil est une valeur seuil de pression inférieure, dans lequel la première valeur de la valeur seuil de pression inférieure est supérieure à la deuxième valeur de la valeur seuil de pression inférieure, dans lequel la valeur seuil est une valeur seuil de pression supérieure, dans lequel la première valeur de la valeur seuil de pression supérieure est supérieure à la deuxième valeur de la valeur seuil de pression supérieure, dans lequel la première valeur pour la valeur de consigne de la pression (p) est supérieure à la deuxième valeur pour la valeur de consigne de la pression (p), et/ou dans lequel la commande ou la régulation s'effectue au moyen d'un compresseur (71) du véhicule ferroviaire (100), relié au réservoir de pression (7).

8. Véhicule (100) comprenant :
- un entraînement (1) électrique ;
- un accumulateur d'énergie (2) électrique relié à l'entraînement (1) électrique ;
- un raccord (3) relié à l'entraînement (1) électrique et/ou à l'accumulateur d'énergie (2) électrique pour une source d'énergie externe, en particulier une ligne aérienne (20) ou un rail conducteur ;
- au moins un sous-système (5, 6, 7) comprenant un habitacle (5, 6) et/ou un réservoir de pression (7) ; et
- une unité de commande ou de régulation (4), laquelle est conçue
pour déterminer si le véhicule se trouve dans un premier mode, dans lequel l'entraînement (1) électrique et/ou l'accumulateur d'énergie (2) électrique sont alimentés en énergie électrique au moyen du raccord (3) ; et
pour commander ou réguler au moins un paramètre (T, c, p) du sous-système (5, 6, 7) en utilisant une valeur seuil de l'au moins un paramètre (T, c, p) et/ou une valeur de consigne de l'au moins un paramètre (T, c, p), dans lequel une première valeur respective est utilisée pour la valeur seuil de l'au moins un paramètre (T, c, p) et/ou la valeur de consigne de l'au moins un paramètre (T, c, p) lorsque le véhicule est dans le premier mode, et dans lequel une deuxième valeur respective différente de la première valeur respective est utilisée pour la valeur seuil de l'au moins un paramètre (T, c, p) et/ou la valeur de consigne de l'au moins un paramètre (T, c, p) lorsque le véhicule n'est pas dans le premier mode de telle sorte que plus d'énergie électrique peut être utilisée dans le premier mode pour créer un tampon correspondant dans le réservoir de pression (7) et/ou dans l'habitacle (5, 6) pour le deuxième mode, lequel tampon peut être utilisé pour une réduction correspondante du besoin énergétique dans le deuxième mode.

9. Véhicule (100) selon la revendication 8, dans lequel la deuxième valeur respective est utilisée pour la valeur seuil de l'au moins un paramètre (T, c, p) et/ou la valeur de consigne de l'au moins un paramètre (T, c, p) lorsque le véhicule est dans un deuxième mode alimenté par l'accumulateur d'énergie (2) électrique, en particulier dans le deuxième mode alimenté par un accumulateur, dans lequel le véhicule est un véhicule ferroviaire, dans lequel l'au moins un sous-système est relié à un consommateur auxiliaire (56, 71) électrique, dans lequel le véhicule comporte un chauffage pour l'habitacle, dans lequel le véhicule comporte une installation d'aération pour l'habitacle, dans lequel le véhicule comporte une installation de climatisation (56) relié à l'habitacle, et/ou dans lequel le véhicule comporte un compresseur (71) relié au réservoir de pression.

10. Véhicule (100) selon la revendication 8 ou 9, dans lequel l'unité de commande ou de régulation (4) est conçue pour mettre en oeuvre un procédé selon l'une quelconque des revendications 2 à 7.
